# EUROPEAN PATENT APPLICATION

(11) **EP 4 660 477 A1**
(43) Date of publication of application: **10.12.2025**
(21) Application number: 23919853.4
(22) Date of filing: 23.10.2023
(51) Int. Cl.: F16F 15/08, F16F 1/38

(54) **ANTI-VIBRATION SUPPORT STRUCTURE**

(30) Priority: 31.01.2023 JP 2023013360
(71) Applicant: Prospira Corporation, Kanagawa prefecture 212-0013 (JP)
(72) Inventor: ISHIKAWA, Tadaomi, Kawasaki city, Kanagawa 212-0013 (JP); KAWADA, Masayoshi, Kawasaki city, Kanagawa 212-0013 (JP)
(74) Representative: V.O.
(86) International application number: PCT/JP2023/038211
(87) International publication number: WO 2024/161718

(57) **Abstract**

An anti-vibration support structure capable of reducing displacement of a supported member when receiving vibration input is provided. An anti-vibration support structure 1 according to the present invention is the anti-vibration support structure 1 for supporting a supported member 3 on a support member 2 in a vibration controlling manner, and in the anti-vibration support structure 1, the supported member 3 includes a total of two layers arranged in a vertical direction, anti-vibration mounts 4a, 4b are provided between each of the two layers including supported members 3a, 3b, and the support member 2, respectively, and the two layers including the supported members 3a, 3b are rigidly coupled to each other via the corresponding anti-vibration mounts 4a, 4b.

## Description

### TECHNICAL FIELD

The present invention relates to an anti-vibration support structure.

### BACKGROUND ART

There has been known, for example, a structure for supporting, in a vibration controlling manner, a supported member such as a cabin, which corresponds to the side receiving vibration, on a support member such as a vehicle body frame of a construction machine, which corresponds to the side generating the vibration (for example, Patent Literature 1, Patent Literature 2, etc.).

### CITATION LIST

### PATENT LITERATURE

Patent Literature 1: JP-A-2011-179278
Patent Literature 2: JP-A-2004-301196

### SUMMARY OF INVENTION

### TECHNICAL PROBLEM

Here, in a construction machine or the like, for example, an anti-vibration mount may be used to support a supported member, such as a housing accommodating therein an electronic device such as a controller and/or an exhaust gas filter which are weak to acceleration input, on an upper portion of a support member such as a vehicle body frame. In this case, if the anti-vibration mount supports the supported member softly (that is, with a low spring constant), the acceleration input to the housing can be lowered, however, shaking (displacement) may become large. This may cause impact input due to contact with other parts, or reduction in the durability of the anti-vibration mount.

In particular, in the case where the supported member which is tall or has two or more layers is to be supported in a vibration controlling manner on the support member, the position of the center of gravity of the supported member may be largely away upwardly in the vertical direction from the anti-vibration support position. This may lead to the risk that the displacement of the supported member becomes large.

The present invention has been made in view of the circumstances described above, and an object of the present invention is to provide an anti-vibration support structure capable of reducing displacement of a supported member when receiving vibration input.

### SOLUTION TO PROBLEM

The problems described above can be solved by the following means.
(1) The anti-vibration support structure according to the present invention is an anti-vibration support structure for supporting a supported member on a support member in a vibration controlling manner, the supported member including a total of two layers arranged in a vertical direction, anti-vibration mounts being provided between each of the two layers of the supported member and the support member, respectively, and the two layers of the supported member being rigidly coupled to each other via the anti-vibration mounts corresponding thereto. According to the anti-vibration support structure of the present invention, it is possible to reduce displacement of the supported member when receiving vibration input.
(2) In the anti-vibration support structure according to (1), it is preferable if the anti-vibration mount includes an inner cylinder, an outer cylinder surrounding the inner cylinder, and a main rubber connecting the inner cylinder and the outer cylinder, the outer cylinder being provided, at an end portion on one side in an axial direction thereof, with a flange portion extending outwardly in a radial direction, and the supported member is coupled to the inner cylinder, and the support member is coupled to the outer cylinder. In this case, it is possible to make the whole structure of the anti-vibration support structure simple.
(3) In the anti-vibration support structure according to (2), it is preferable if the anti-vibration support structure includes at least one anti-vibration device between the two layers of the supported member, each of the al least one anti-vibration device includes the two anti-vibration mounts, and also has an inner cylinder portion and an outer cylinder portion, the inner cylinder portion being formed such that two end faces on another side in an axial direction of the inner cylinders of the two anti-vibration mounts are brought to abut against each other, and the outer cylinder portion being formed such that two end faces on another side in an axial direction of the outer cylinders of the two anti-vibration mounts are brought to abut against each other, a bolt is inserted into an axial cavity portion formed inside the inner cylinder portion to bolt mounting portions of the two layers of the supported member together, so that the two layers of the supported member are rigidly coupled to each other, and a mounting portion of the support member is fit into a circumferential recess portion form in the outer cylinder portion such that the anti-vibration mounts are provided between each of the two layers of the supported member and the support member, respectively. In this case, it is possible to realize the anti-vibration device structure capable of resisting a large dynamic load.
(4) In the anti-vibration support structure according to (3), it is preferable if the anti-vibration device comprises a plurality of anti-vibration devices, and the plurality of anti-vibration devices is provided between the two layers of the supported member. In this case, the support member can uniformly and stably support the supported member.
(5) In the anti-vibration support structure according to any of (1) to (4), it is preferable if an elastic member is further provided between one of the two layers of the supported member which is positioned on an upper side in the vertical direction and the support member. In this case, it is possible to improve the durability of the anti-vibration mounts provided between the supported member positioned on an upper side in the vertical direction and the support member.

### ADVANTAGEOUS EFFECTS OF INVENTION

According to the present invention, it is possible to provide an anti-vibration support structure capable of reducing displacement of a supported member when receiving vibration input.

### BRIEF DESCRIPTION OF DRAWINGS

[FIG. 1] FIG. 1(a) is a schematic front view of an anti-vibration support structure according to the first embodiment of the present invention, and FIG. 1(b) is a schematic partial side view of the anti-vibration support structure illustrated in FIG. 1(a).
[FIG. 2A] FIG. 2A is an axial cross-sectional view illustrating an example of an anti-vibration mount that can be used in the anti-vibration support structure illustrated in FIG. 1(a) and FIG. 1(b).
[FIG. 2B] FIG. 2B is an axial cross-sectional view illustrating an example of an anti-vibration device using the anti-vibration mount illustrated in FIG. 2A, with being mounted to a support member and a supported member.
[FIG. 3] FIG. 3 is an axial cross-sectional view illustrating a further example of an anti-vibration mount that can be used in the anti-vibration support structure illustrated in FIG. 1(a) and FIG. 1(b).
[FIG. 4A] FIG. 4A is an axial cross-sectional view illustrating a still further example of an anti-vibration mount that can be used in the anti-vibration support structure illustrated in FIG. 1(a) and FIG. 1(b).
[FIG. 4B] FIG. 4B is an axial cross-sectional view illustrating an example of an anti-vibration device using the anti-vibration mount illustrated in FIG. 4A, with being mounted to a support member and a supported member.
[FIG. 5] FIG. 5 is a schematic partial side view of an anti-vibration support structure according to the second embodiment of the present invention, which is illustrated in the same manner as FIG. 1(b).
[FIG. 6] FIG. 6 is a schematic front view for explaining an anti-vibration support structure according to a comparison example.
[FIG. 7] FIG. 7 is a schematic front view for explaining an anti-vibration support structure according to a further comparison example.
[FIG. 8A] FIG. 8A is a schematic perspective view of an anti-vibration support structure according to a comparison example, which is a subject for simulation.
[FIG. 8B] FIG. 8B is a schematic perspective view of an anti-vibration support structure according to an example of the present invention, which is a subject for simulation.

### DESCRIPTION OF EMBODIMENTS

An anti-vibration support structure according to the present invention can be suitably used as any kind of anti-vibration support structure. For example, it can be suitably used in a construction machine such as a hydraulic excavator, as an anti-vibration support structure for supporting a housing as a supported member, which accommodates therein an electronic device such as a controller and an exhaust gas filter, on a vehicle body frame as a support member.

Hereinafter, embodiments of the anti-vibration support structure according to the present invention will be described with reference to the drawings.

In each of the drawings herein, the same members and portions are provided with the same reference signs.

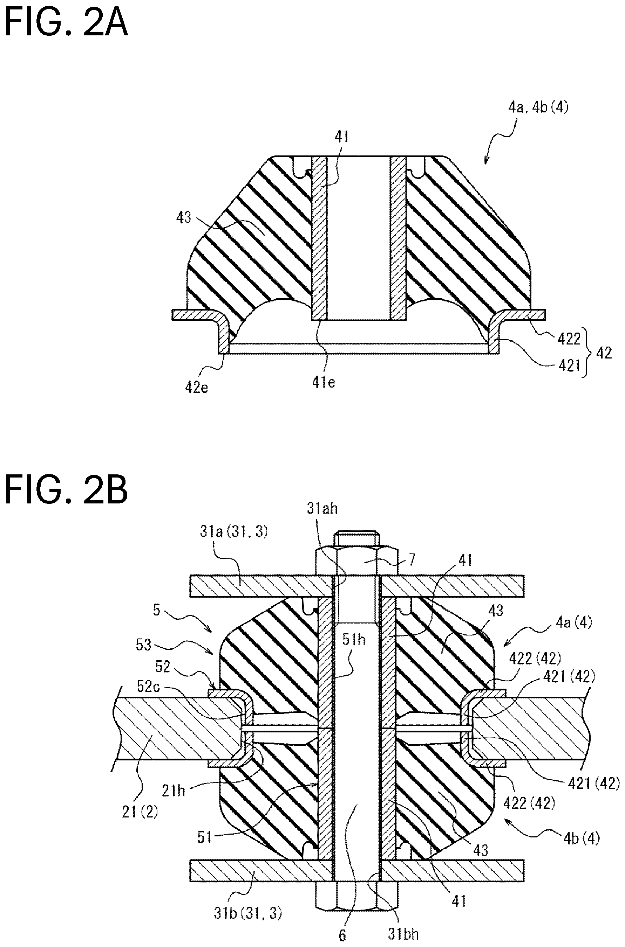

The term "vertical direction" used herein refers to a direction in which the gravity acts, and thus generally refers to a direction perpendicular to the ground. The term "horizontal direction" refers to a direction perpendicular to the vertical direction. In each of the drawings excluding FIG. 2A, FIG. 3, and FIG. 4A, the upper and lower direction thereof corresponds to the vertical direction, and the left and right direction thereof corresponds to the horizontal direction. Furthermore, the term "axial direction" used herein refers to a direction parallel to the central axis of an inner cylinder or an outer cylinder, the term "circumferential direction" used herein refers to a direction circling around the central axis, and the term "radial direction" used herein refers to a direction orthogonal to the central axis.

In the following, an anti-vibration support structure 1 according to the embodiments to be described below may be formed as an anti-vibration support structure for supporting, in a construction machine, a housing as a supported member on a vehicle body frame as a support member, however, it may be any type of anti-vibration support structure.

### (First embodiment)

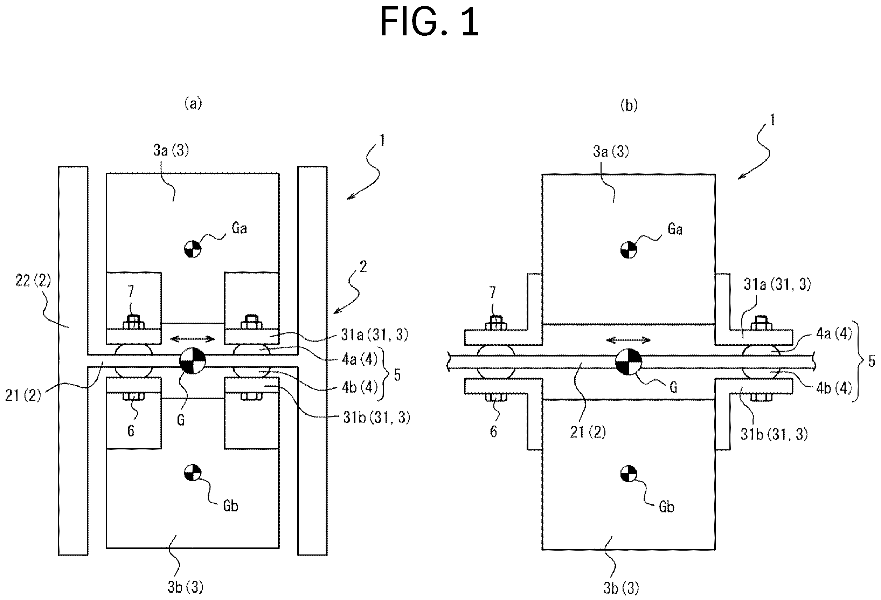

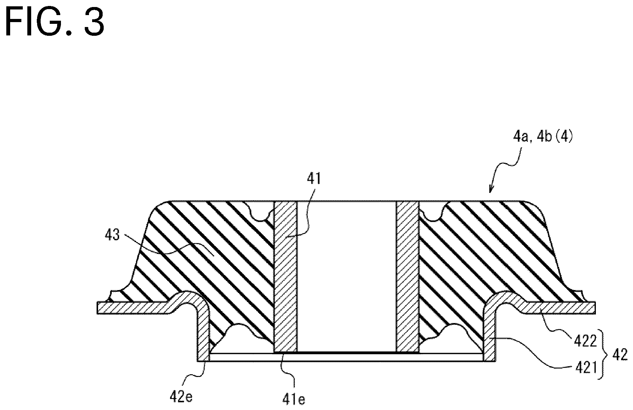

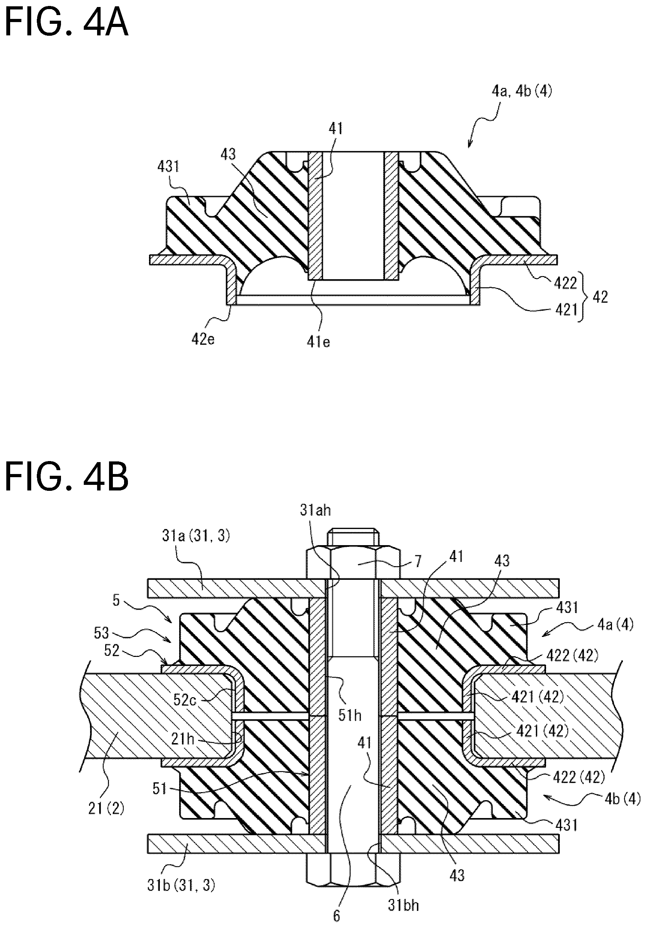

FIG. 1 to FIG. 4B are the drawings for explaining the anti-vibration support structure 1 according to the first embodiment of the present invention. FIG. 1(a) is a schematic front view of the anti-vibration support structure according to the first embodiment of the present invention, and FIG. 1(b) is a schematic partial side view of the anti-vibration support structure illustrated in FIG. 1(a). FIG. 2A is an axial cross-sectional view illustrating an example of an anti-vibration mount that can be used in the anti-vibration support structure illustrated in FIG. 1(a) and FIG. 1(b), and FIG. 2B is an axial cross-sectional view illustrating an example of an anti-vibration device using the anti-vibration mount illustrated in FIG. 2A, with being mounted to a support member and a supported member. FIG. 3 is an axial cross-sectional view illustrating a further example of an anti-vibration mount that can be used in the anti-vibration support structure illustrated in FIG. 1(a) and FIG. 1(b). FIG. 4A is an axial cross-sectional view illustrating a still further example of an anti-vibration mount that can be used in the anti-vibration support structure illustrated in FIG. 1(a) and FIG. 1(b), and FIG. 4B is an axial cross-sectional view illustrating an example of an anti-vibration device using the anti-vibration mount illustrated in FIG. 4A, with being mounted to a support member and a supported member.

As illustrated in FIG. 1(a) and FIG. 1(b), the anti-vibration support structure 1 according to the first embodiment of the present invention is an anti-vibration support structure for supporting a supported member 3 on a support member 2 in a vibration controlling manner.

More specifically, the anti-vibration support structure 1 according to the first embodiment of the present invention has such a structure that, in a construction machine, supports a housing as the supported member 3 which corresponds to the side receiving vibration, on a vehicle body frame as the support member 2 which corresponds to the side generating the vibration. In other words, in the anti-vibration support structure 1 according to the present embodiment, the supported member 3 is supported on the support member 2 by anti-vibration mounts 4 and thus the anti-vibration devices 5, so as to prevent the vibration input toward the vehicle body frame as the support member 2 from transmitting to the housing as the supported member 3 as much as possible. However, the range in which the anti-vibration support structure according to the present invention can be applied is not limited to an anti-vibration support structure for a construction machine.

The expression "support a supported member on a support member in a vibration controlling manner" herein merely refers to a state in which the anti-vibration support structure 1 supports the supported member 3 to the support member 2, but does not necessarily have to support it toward an upper side or upwardly in the vertical direction relative to a support position of the support member 2 for the supported member 3.

As illustrated in FIG. 1(a) and (b), the anti-vibration support structure 1 according to the present embodiment includes the support member 2, the supported member 3, and the anti-vibration mounts 4.

The support member 2 is schematically illustrated in FIG. 1(a) and FIG. (b), and for example, is a vehicle body frame of a construction machine or a frame rigidly coupled to the vehicle body frame. In the example illustrated herein, the support member 2 includes two vertical frame portions 22 and one horizontal frame portion 21. The vertical frame portions 22 extend substantially in the vertical direction, and the horizontal frame portion 21 extends substantially in the horizontal direction between the two vertical frame portions 22, and serves as a mounting portion for the anti-vibration mounts 4 (first anti-vibration mounts 4a and second anti-vibration mounts 4b) (and thus, the anti-vibration devices 5 which will be described later). The horizontal frame portion 21 and the vertical frame portions 22 may be formed of rigid materials such as metal, and they may be integrally formed as one body or may be rigidly coupled to each other. However, the structure of the support member 2 is not particularly limited to the structure described above as long as it can support the supported member 3 thereon via the anti-vibration mounts 4 (and thus, the anti-vibration devices 5).

In FIG. 1(b), the vertical frame portions 22 are not illustrated.

As illustrated in FIG. 1(a) and FIG. 1(b), in the present embodiment, the supported member 3 is provided such that two layers thereof are arranged in the vertical direction. That is, the supported member 3 includes the two layers, which are a first supported member 3a arranged on the upper side in the vertical direction and a second supported member 3b arranged on the lower side in the vertical direction than the first supported member 3a.

As illustrated in FIG. 1(a) and FIG. 1(b), the first supported member 3a and the second supported member 3b are formed as housings, respectively, having the same rectangular parallelepiped shapes and the same sizes. However, the first supported member 3a and the second supported member 3b may have different appearances and/or sizes, and at least one of the appearances thereof may not be rectangular parallelepiped. On the other hand, considering the easiness in mounting the supported member 3 to the support member 2, etc., it is preferable to form the first supported member 3a and the second supported member 3b to have the same appearances and sizes, and moreover, have rectangular parallelepiped shapes (including cubes).

Here, in each of the drawings herein, the reference sign "Ga" represents the center of gravity of the first supported member 3a (hereinafter, also referred to as "first center of gravity") which is positioned on the upper side in the vertical direction, the reference sign "Gb" represents the center of gravity of the second supported member 3b (hereinafter, also referred to as "second center of gravity") which is positioned on the lower side in the vertical direction, and the reference sign "G" represents the center of gravity of the whole supported member 3 (hereinafter, also referred to as "center of gravity for whole") when considering the first supported member 3a and the second supported member 3b as a whole.

In the example illustrated in FIG. 1(a) and FIG. 1(b), the first center of gravity Ga, the second center of gravity Gb, and the center of gravity G for whole are positioned on an imaginary straight line extending along the vertical direction (that is, at an angle of 0° relative to the vertical direction without inclining relative to the vertical direction), that is, are positioned along the vertical direction. In other words, the first supported member 3a and the second supported member 3b are arranged such that the first center of gravity Ga is positioned directly above the second center of gravity Gb along the vertical direction (that is, such that the position of the first center of gravity Ga in the horizontal direction and that of the second center of gravity Gb are the same with each other), and accordingly, the first center of gravity Ga, the second center of gravity Gb, and center of gravity G for whole are positioned along the vertical direction. However, the first center of gravity Ga, the second center of gravity Gb, and the center of gravity G for whole may not be positioned along the vertical direction. In other words, the first supported member 3a and the second supported member 3b may be positioned such that the first center of gravity Ga is not positioned directly above the second center of gravity Gb in the vertical direction (that is, such that the position of the first center of gravity Ga in the horizontal direction and that of the second center of gravity Gb are not the same with each other), and thus the position of the first center of gravity Ga in the horizontal direction and that of the second center of gravity Gb may be slightly shifted from each other. However, in view of prevention of the unintentional rotational motion and translational motion from occurring in the supported member 3 (the first supported member 3a and/or the second supported member 3b) when receiving the vibration input from the support member 2 which is a vibration generation portion, it is preferable that the first center of gravity Ga is positioned directly above the second center of gravity Gb along the vertical direction (that is, such that the position of the first center of gravity Ga in the horizontal direction and that of the second center of gravity Gb are the same with each other). Furthermore, for the purpose of prevention of vibration, it is most desirable that the center of gravity G for whole is arranged at the same position as the elastic center of the whole anti-vibration support structure 1 (the same position in the horizontal direction and the vertical direction), and by adjusting the distances from the first center of gravity Ga and the second center of gravity Gb and adjusting the spring constant of an elastic member (a main rubber 43 or the like, which will be described later) of a support point, which will be described later, an ideal anti-vibration structure can be realized.

Furthermore, in the example illustrated in FIG. 1(a) and FIG. 1(b), in the vertical direction, the position of the center of gravity G for whole is the same as a support position for the supported member 3 by the support member 2 (that is, the position on the horizontal frame portion 21 which is a mounting portion on the supported member 2 for the supported member 3), in other words, a support point on the support member 2 for each of the anti-vibration mounts 4 (or, for example, the anti-vibration devices 5 which will be described later). On the other hand, in the vertical direction, the position of the center of gravity G for whole may not be the same as the support position or the support point but may be slightly shifted from each other. However, in view of prevention of the unintentional rotational motion and translational motion from occurring in the supported member 3 (the first supported member 3a and/or the second supported member 3b) when receiving the vibration input from the support member 2 which is a vibration generation portion, it is most preferable that each member of the anti-vibration support structure 1 is formed and arranged such that the center of gravity G for whole and the elastic center of the whole anti-vibration support structure 1 are close to each other (most preferably, match), by arranging the center of gravity G for whole so as to make the position thereof the same as the support position for the supported member 3 by the support member 2 (in other words, the support point on the support member 2 for each of the anti-vibration mounts 4) in the vertical direction if the mass of the first supported member 3a and that of the second supported member 3b are the same with each other, or, if they differ from each other, make the distances from the center of gravity G for whole thereto in the vertical direction inversely proportional.

As illustrated in FIG. 1(a) and FIG. 1(b), in the present embodiment, the supported member 3 (the first supported member 3a and the second supported member 3b) includes mounting brackets 31 (a first mounting bracket 31a and a second mounting bracket 31b) which serve as mounting portions for the anti-vibration mounts 4 (the first anti-vibration mounts 4a and the second anti-vibration mounts 4b) (and thus, the anti-vibration devices 5 which will be described later). The mounting brackets 31 (the first mounting bracket 31a and the second mounting bracket 31b) may be formed of rigid bodies such as metal, and may be integrally formed together with the supported member 3 (the first supported member 3a and the second supported member 3b) as one body, or may be rigidly coupled to the supported member 3 (the first supported member 3a and the second supported member 3b), for example, by bolting or the like. The mounting brackets 31 (the first mounting bracket 31a and the second mounting bracket 31b) can be considered as portions of the supported member 3 (the first supported member 3a and the second supported member 3b).

In the example illustrated in FIG. 1(a) and FIG. 1(b), the plurality of mounting brackets 31a (total of four in the present example) is arranged for the first supported member 3a, around the lower portion thereof. On the other hand, in a further example not illustrated herein, for example, one piece of mounting bracket 31a, which is formed as one body including the plurality of mounting brackets 31a as described above and provided with a plurality of mounting portions, may be integrally formed together with or coupled to a lower portion of the first supported member 3a. In the same manner, in present example, the plurality of second mounting brackets 31b (in the present example, total of four) is arranged for the second supported member 3b, around the upper portion thereof. On the other hand, although not illustrated, for example, one piece of mounting bracket 31b, which is formed as one body including the plurality of mounting brackets 31b as described above and provided with a plurality of mounting portions, may be integrally formed together with or coupled to an upper portion of the second supported member 3b. In these cases, for example, an operation of coupling the mounting bracket 31 (the first mounting bracket 31a and the second mounting bracket 31b) to the supported member 3 (the first supported member 3a and the second supported member 3b) can be facilitated.

In the present embodiment, the two layers of the supported member 3 are arranged on the support member 2 in the vertical direction, however, three or more layers of the supported member 3 may be arranged on the support member 2 in the vertical direction. In this case, by applying the structure according to the present embodiment to the two layers of the supported member 3 which are adjacent to each other in the vertical direction, the same advantageous effects as those according to the present embodiment, which will be described later, can be obtained.

As illustrated in FIG. 1(a) and FIG. 1(b), in the present embodiment, the anti-vibration mounts 4 (the first anti-vibration mounts 4a and the second anti-vibration mounts 4b) are provided between each of the two layers of the supported member 3 (the first supported member 3a and the second supported member 3b) and the support member 2, respectively.

An example of the anti-vibration mounts 4 (first anti-vibration mounts 4a and second anti-vibration mounts 4b) that can be used in the anti-vibration support structure 1 according to the present embodiment will be described in detail later with reference to FIG. 2A, FIG. 3, and FIG. 4B.

In the present embodiment, the two layers of the supported member 3 (the first supported member 3a and the second supported member 3b) are rigidly coupled to each other via the anti-vibration mounts 4 (the first anti-vibration mounts 4a and the second anti-vibration mounts 4b) corresponding thereto.

Here, the state in which the two layers of the supported member 3 are "rigidly coupled" to each other refers to a state in which the two layers of the supported member 3 are rigidly coupled to each other such that they move together as a rigid body (an object that does not deform under force).

Furthermore, the state in which the two layers of the supported member 3 are "rigidly coupled to each other via the anti-vibration mounts 4 (the first anti-vibration mounts 4a and the second anti-vibration mounts 4b) corresponding thereto" preferably refers to a state in which the first supported member 3a and the second supported member 3b are rigidly coupled to each other by, for example, a rigid member, with the first anti-vibration mount 4a for supporting the first supported member 3a on a mounting portion (in the present example, the horizontal frame portion 21) on the support member 2 and the second anti-vibration mount 4b for supporting the second supported member 3b on a mounting portion (in the present example, the horizontal frame portion 21 which is the same as the horizontal frame portion 21 described above), which are arranged on the upper side and the lower side, respectively, along the vertical direction, being sandwiched therebetween. More specifically, for example, in the present embodiment, as illustrated in FIG. 1(a) and FIG. 1(b), the first supported member 3a and the second supported member 3b are, for example, bolted to be fastened together by a bolt 6 and a nut 7 which correspond to the rigid bodies, with the first anti-vibration mount 4a and the second anti-vibration mount 4b (and thus, the anti-vibration device 5 to be described later) being sandwiched therebetween, thereby being rigidly coupled to each other.

Next, the advantageous effects according to the embodiment described above will be described.

Firstly, in the present embodiment, the anti-vibration mounts 4 (the first anti-vibration mounts 4a and the second anti-vibration mounts 4b) are provided between each of the two layers of the supported member 3 (the first supported member 3a and the second supported member 3b) and the support member 2, respectively. This enables the anti-vibration support structure 1 of the present embodiment to support the supported member 3 on the support member 2 in a vibration controlling manner.

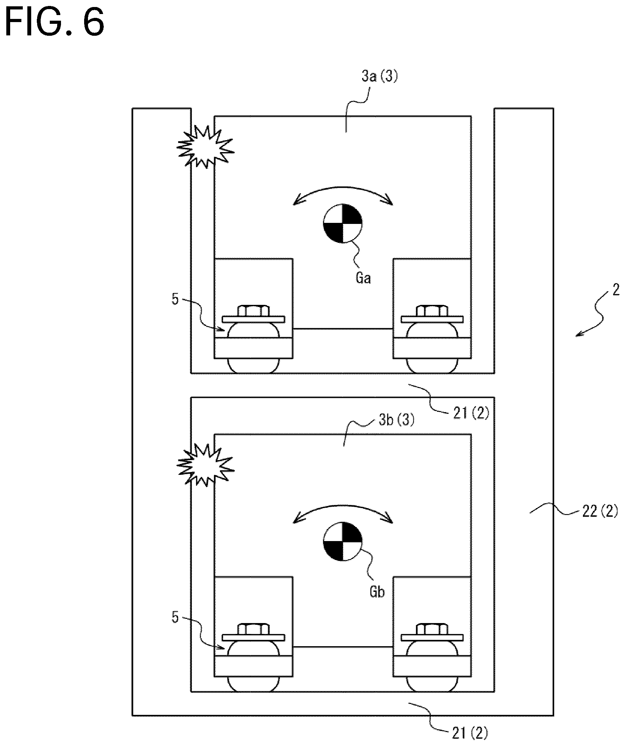

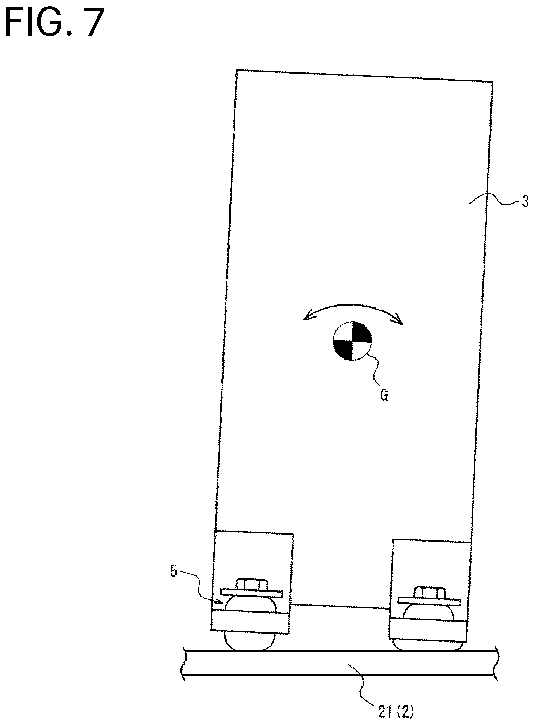

Secondly, in the present embodiment, the two layers of the supported member 3 (the first supported member 3a and the second supported member 3b) are arranged in the vertical direction, and the two layers of the supported member 3 (the first supported member 3a and the second supported member 3b) are rigidly coupled to each other via the anti-vibration mounts 4 (the first anti-vibration mounts 4a and the second anti-vibration mounts 4b) corresponding thereto. In this case, the center of gravity G for whole of the two layers of the supported member 3 (the first supported member 3a and the second supported member 3b) can be positioned at a position between the center of gravity Ga and the center of gravity Gb of the two layers in the vertical direction. In other words, in the vertical direction, the position of the center of gravity G for whole can be brought close to the position of the support point on the support member 2 for each of the anti-vibration mounts 4 (or, for example, the anti-vibration devices 5 which will be described later), and thus the center of gravity G for whole can be arranged, for example, near a position just beside the support point in the horizontal direction. In this case, even when the support member 2, which is a vibration generation portion, is displaced in the horizontal direction as indicated with the two-way arrow, the rotational motion of the first supported member 3a and the second supported member 3b can be suppressed, and thus the horizontal displacement of the first supported member 3a and the second supported member 3b can also be suppressed more, as compared with the case illustrated in FIG. 6 for comparison, in which the two layers of the supported member 3 (the first supported member 3a and the second supported member 3b) are not rigidly coupled to each other via the anti-vibration mounts (in FIG. 6, illustrated as the anti-vibration devices 5 using the anti-vibration mounts) corresponding thereto, or the case illustrated in FIG. 7 for comparison, in which a total of two layers of the supported member 3 are not arranged in the vertical direction, and thus the two layers of the supported member are not rigidly coupled to each other via the anti-vibration mounts (in FIG. 7, illustrated as the anti-vibration devices 5 using the anti-vibration mounts) corresponding thereto. Furthermore, according to the present embodiment, even when the two layers of the supported member 3 (the first supported member 3a and the second supported member 3b) are supported softly (that is, with a low spring constant) by the anti-vibration mounts 4 (the first anti-vibration mounts 4a and the second anti-vibration mounts 4b), the rotational motion and the horizontal displacement of the supported member 3 can be suppressed, and accordingly, impact input due to contact with other parts or reduction in the durability of the anti-vibration mounts 4 can be suppressed.

As described above, according to the anti-vibration support structure 1 of the present embodiment, it is possible to reduce the displacement of the supported member 3 when receiving vibration input.

Furthermore, in the present embodiment, the two layers of the supported member 3 (the first supported member 3a and the second supported member 3b) are rigidly coupled to each other via the anti-vibration mounts 4 (the first anti-vibration mounts 4a and the second anti-vibration mounts 4b) corresponding thereto, and accordingly, as illustrated in FIG. 1(a) and FIG. 1(b), the anti-vibration mounts 4 (the first anti-vibration mounts 4a and the second anti-vibration mounts 4b) can be provided to the one common horizontal frame portion 21 of the support member 2, respectively. In this case, as described above, the displacement of the supported member 3 when receiving the vibration input can be reduced, and also the positions to which the anti-vibration mounts 4 (and thus the anti-vibration devices 5 which will be described later) are to be mounted can be reduced. This enables saving of space more than, for example, the case illustrated in FIG. 6 for comparison, in which the two layers of the supported member 3 (the first supported member 3a and the second supported member 3b) are supported in a vibration control manner by anti-vibration mounts (in FIG. 6, illustrated as the anti-vibration devices 5 using the anti-vibration mounts) provided to the two different horizontal frames 21 of the support member 2, respectively.

Next, referring to FIG. 2A to FIG. 4B, an example of the specific structure of the anti-vibration mount 4 (the first anti-vibration mount 4a and the second anti-vibration mounts 4b) that can be used for the anti-vibration support structure 1 of the present embodiment and that of the anti-vibration device 5 using the anti-vibration mounts 4 will be described.

FIG. 2A is an axial cross-sectional view illustrating an example of the anti-vibration mount 4 that can be used in the anti-vibration support structure 1 illustrated in FIG. 1(a) and FIG. 1(b), and FIG. 2B is an axial cross-sectional view illustrating an example of an anti-vibration device using the anti-vibration mounts illustrated in FIG. 2A, with being mounted to the support member 2 and the supported member 3. In FIG. 2A, and FIG. 3 and FIG. 4A, which will be described later, the anti-vibration mounts 4 to which no load is being applied are illustrated.

In the present embodiment, the first anti-vibration mount 4a and the second anti-vibration mount 4b have the same structures (shape, size, inner structure, etc.), and accordingly, in FIG. 2A, they will be explained while being collectively referred to as the anti-vibration mounts 4. However, the structure of the first anti-vibration mount 4a and that the second anti-vibration mount 4b may be different from each other.

As illustrated in FIG. 2A, the anti-vibration mount 4 according to the present embodiment includes an inner cylinder 41, an outer cylinder 42, and a main rubber 43.

In the present example, the outer cylinder 42 surrounds the inner cylinder 41 in a substantially concentric manner when viewed from above, and includes a cylinder portion 421 and a flange portion 422. The flange portion 422 extends outwardly in a radial direction, and is provided at an end portion on one side in the axial direction of the cylinder portion 421 (and thus, the outer cylinder 42). The main rubber 43 is bonded to the inner cylinder 41 and the outer cylinder 42 by, for example, vulcanization bonding, so as to connect the inner cylinder 41 and the outer cylinder 42. That is, the anti-vibration mount 4 according to the present example includes the inner cylinder 41, the outer cylinder 42 surrounding the inner cylinder 41, and the main rubber 43 connecting the inner cylinder 41 and the outer cylinder 42, and the outer cylinder 42 is provided, at an end portion on one side in the axial direction thereof, with the flange portion 422 extending outwardly in the radial direction. The inner cylinder 41 and the outer cylinder 42 can be formed of rigid materials such as metal.

In the present example, as illustrated in FIG. 2B in which the anti-vibration device 5 using the anti-vibration mounts 4 is depicted, the supported member 3 (in the present example, more specifically, the mounting bracket 31 which is a mounting portion on the supported member 3 for the anti-vibration mount 4) is coupled to the inner cylinder 41, and the support member 2 (in the present example, more specifically, the horizontal frame portion 21 which is a mounting portion on the support member 2 for the anti-vibration mount 4) is coupled to the outer cylinder 42.

According to the anti-vibration mount 4 of the example described above, the supported member 3 can be supported in a vibration controlling manner by the anti-vibration mount 4 having a simple structure, and thus the whole structure of the anti-vibration support structure 1 can be made simple.

FIG. 3 is an axial cross-sectional view illustrating a further example of the anti-vibration mount 4, and FIG. 4A is an axial cross-sectional view illustrating a still further example of the anti-vibration mount 4. In the anti-vibration mount 4 illustrated in FIG. 3 and 4A, the same members or portions as those of the anti-vibration mount 4 illustrated in FIG. 2A are provided with the same reference signs, and in the following, the explanation thereof will be omitted.

The anti-vibration mount 4 illustrated in FIG. 3 differs from the anti-vibration mount 4 illustrated in FIG. 2A mainly in the shape and size of the main rubber 43 and the shape of the outer cylinder 42. As compared with the anti-vibration mount 4 illustrated in FIG. 2A, in the anti-vibration mount 4 illustrated in FIG. 3, the volume of rubber of the main rubber 43 is large on one side in the axial direction (the upper side in FIG. 3) and on outer sides in the radial direction (that is, so-called shoulder portions), and the inner circumferential side of the flange portion 422 of the outer cylinder 42 is recessed toward one side in the axial direction. In this case, in the state where the anti-vibration mount 4 is mounted to the support member 2 and the supported member 3, for example, the contact area between the mounting bracket 31 (see FIG. 2B) coupled to one side in the axial direction of the inner cylinder 41 and the main rubber 43 increases, and accordingly, the load of the supported member 3 can be supported with a larger area. This improves the durability of the main rubber 43, and thus the anti-vibration mount 4.

The anti-vibration mount 4 illustrated in FIG. 4A differs from the anti-vibration mount 4 illustrated in FIG. 2A mainly in the shapes of the main rubber 43. The anti-vibration mount 4 illustrated in FIG. 4A includes a stopper portion 431 which is provided at a position on an outer side in the radial direction of the main rubber 43. In this case, even when the anti-vibration mount 4 being used in the anti-vibration support structure 1 receives excessive vibration input, the mounting bracket 31 (see FIG. 2B) coupled to one side in the axial direction of the inner cylinder 41 and the stopper portion 431 are brought into contact with each other, and accordingly, for example, excessive relative displacement of the supported member 3 relative to the support member 2 can be suppressed, and also the durability of the main rubber 43, and thus the anti-vibration mount 4 can be improved.

Next, the anti-vibration device 5 using the anti-vibration mounts 4 will be described.

FIG. 2B is an axial cross-sectional view illustrating an example of the anti-vibration device 5 using the anti-vibration mounts 4 illustrated in FIG. 2A, with being mounted to the support member 2 and the supported member 3.

As illustrated in FIG. 1(a), FIG. 1(b), and FIG. 2B, in the present embodiment, the anti-vibration support structure 1 includes the anti-vibration device 5, whose example is illustrated in FIG. 2B, between the two layers of the supported member 3a, that is, between the first supported member 3a and the second supported member 3b in the vertical direction.

Referring to FIG. 2B, the anti-vibration device 5 according to the present example includes the two anti-vibration mounts 4 (the first anti-vibration mounts 4a and the second anti-vibration mounts 4b) exemplified with reference to FIG. 2A. The two anti-vibration mounts 4 may have the same or different structures, for example, the same or different shapes and sizes. However, for combining the two anti-vibration mounts 4 appropriately to form the anti-vibration device 5, it is preferable that the two anti-vibration mounts 4 for forming the anti-vibration device 5 have the structures which are the same from each other (that is, the same anti-vibration mounts).

As illustrated in FIG. 2B, the anti-vibration device 5 includes an inner cylinder portion 51 and an outer cylinder portion 52. The inner cylinder portion 51 is formed such that two end faces 41e (see FIG. 2A) on the other side in the axial direction of the inner cylinders 41 of the two anti-vibration mounts 4 (first anti-vibration mounts 4a and second anti-vibration mounts 4b) are brought to abut against each other. The outer cylinder portion 52 is formed such that two end faces 42e (see FIG. 2A) on the other side in the axial direction of the outer cylinders 42 of the two anti-vibration mounts 4 (first anti-vibration mounts 4a and second anti-vibration mounts 4b) are brought to abut against each other. Furthermore, the anti-vibration device 5 includes a main rubber portion 53 between the inner cylinder portion 51 and the outer cylinder portion 52, and the main rubber portion 53 is formed with the main rubbers 43 of the anti-vibration mounts 4 which form the anti-vibration device 5.

Here, the expression "the other side in the axial direction" refers to the side in the axial direction which is opposite to the "one side in the axial direction" of the outer cylinder 42, on which the flange portion 422 is formed in the outer cylinder 42. Furthermore, the expressions "formed such that two end faces 41e on the other side in the axial direction of the inner cylinders 41... are brought to abut against each other" and "formed such that two end faces 42e on the other side in the axial direction of the outer cylinders 42... are brought to abut against each other" merely refer to the state in which the two end faces 41e face each other and the two end faces 42e face each other so that the two layers of the supported member 3 can be rigidly coupled to each other. In other words, the two end faces 41e do not necessarily have to be in direct contact with each other and/or the two end face 42e do not necessarily have to be in direct contact with each other in the state in which the anti-vibration device 5 is being mounted to the support member 2 and the supported member 3 as illustrated in FIG. 2B (hereinafter, also referred to as "mounted state"). However, for rigidly and reliably coupling the two layers of the supported member 3, in the mounted state, it is preferable that at least either of the two end faces 41e of the inner cylinder 41 or the two end faces 42e of the outer cylinder 42 are directly in contact with each other. In the example illustrated in FIG. 2B, in the mounted state, the two end faces 41e of the inner cylinder 41 are directly contact with each other while the two end faces 42e of the outer cylinder 42 are not directly contact with each other.

In the present example, the two layers of the supported member 3 are rigidly coupled to each other by bolting, which will be described later, and also by direct contact between the two end faces 41e of the inner cylinder 41. However, as long as the two layers of the supported member 3 can be rigidly coupled to each other by direct contact between the two end faces 41e of the inner cylinder 41 and/or the two end faces 42e of the outer cylinder 42, bolting does not necessarily have to be performed for further coupling the two layers of the supported member 3.

Referring to FIG. 2B, in the anti-vibration support structure 1 of the present embodiment, the bolt 6 is inserted into an axial cavity portion 51h formed inside the inner cylinder portion 51 of the anti-vibration device 5 described above so that the mounting portions (more specifically, in the present embodiment, the two mounting brackets 31, that is, the first mounting bracket 31a and the second mounting bracket 31b) of the two layers of the supported member 3 are bolted together, whereby the two layers of the supported member 3 (the first supported member 3a and the second supported member 3b) are rigidly coupled to each other by the anti-vibration support structure 1. More specifically, in the present example, the bolt 6 is inserted into a through-hole 31bh provided in the second mounting bracket 31b, the axial cavity portion 51h inside the inner cylinder portion 51, and a through-hole 31ah provided in the first mounting bracket 31a, and then fastened by the nut 7, so that the mounting portions of the two layers of the supported member 3 are bolted together.

Furthermore, referring to FIG. 2B, in the anti-vibration support structure 1 according to the present embodiment, a mounting portion of the support member 2 (more specifically, in the present example, the horizontal frame portion 21) is fitted in a circumferential recess portion 52c formed in the outer cylinder portion 52 of the anti-vibration device 5 described above, so that the anti-vibration mounts 4 (the first anti-vibration mounts 4a and the second anti-vibration mounts 4b) are provided between each of the two layers of the supported member 3 (the first supported member 3a and the second supported member 3b) and the support member 2. Here, as illustrated in FIG. 2B, the circumferential recess portion 52c is formed, on the circumference of the outer cylinder portion 52 of the anti-vibration device 5, with the flange portion 422 and the cylinder portion 421 of the outer cylinder portion 42 of the first anti-vibration mount 4a, and the cylinder portion 421 and the flange portion 422 of the outer cylinder portion 42 of the second anti-vibration mount 4b, when the two end faces 42e on the other side in the axial direction of the outer cylinder portions 42 of the two anti-vibration mounts 4 are brought to abut against each other. In FIG. 2B, the reference sign "21h" is indicative of a through-hole provided in the horizontal frame portion 21, into which the cylinder portion 421 of the outer cylinder 42 of each of the anti-vibration mounts 4 is to be inserted.

The anti-vibration device 5 according to the example described above may be fixed to mounting portions (in the example described above, the horizontal frame portion 21, and the first mounting bracket 31a and the second mounting bracket 31b) provided in the support member 2 and the supported member 3, respectively, in advance, for example, by bolting. Alternatively, the support member 2 and the supported member 3 may be mounted to the corresponding mounting portions after fixing the anti-vibration devices 5 to the mounting portions by bolting or the like.

In the example illustrated in FIG. 2B, in the mounted state, the main rubber 43 of each of the first anti-vibration mount 4a and the second anti-vibration mount 4b is compressed as compared with the natural state thereof illustrated in FIG. 2A, in which residual tensile stress or concentration of tensile stress in each main rubber 43 is relaxed. This improves the durability of the main rubber 43, and thus the anti-vibration mount 4 or the anti-vibration device 5.

Using the anti-vibration device 5 having the structures described above, which is so-called a sandwich-type anti-vibration device, for sandwiching a mounting portion of the support member 2 with the two anti-vibration mounts 4 allows the vibration input and the load to be supported by the two main rubbers 43 of the two anti-vibration mounts 4. This can realize the anti-vibration device structure 1 capable of resisting a large dynamic load.

FIG. 4B is an axial cross-sectional view illustrating a further example of the anti-vibration device 5. In the anti-vibration device 5 illustrated in FIG. 4B, the same members or portions as those of the anti-vibration device 5 illustrated in FIG. 2B are provided with the same reference signs.

The anti-vibration device 5 illustrated in FIG. 4B mainly differs from the anti-vibration device 5 illustrated in FIG. 2B in that it does not use the anti-vibration mounts 4 illustrated in FIG. 2A as the two anti-vibration mounts 4 (the first anti-vibration mounts 4a and the second anti-vibration mounts 4b), but uses the anti-vibration mounts 4 illustrated in FIG. 4A. The other features and advantageous effects according to the anti-vibration device 5 illustrated in FIG. 4B are the same as those of the anti-vibration device 5 illustrated in FIG. 2B, and the detailed explanation thereof will be omitted.

As illustrated in FIG. 1(a) and FIG. 1(b), in the present embodiment, the anti-vibration support structure 1 includes a plurality of (four in the example illustrated in FIG. 1(a) and FIG. 1(b)) anti-vibration devices 5 between the two layers of the supported member 3 (the first supported member 3a and the second supported member 3b). This allows the support member 2 to uniformly and stably support the supported member 3.

The number of anti-vibration devices 5 to be provided may be appropriately set depending on the shape, size, and the like of the support member 2 and the supported member 3 but is not limited to the specific number. The number of the anti-vibration devices 5 to be provided is not limited to four, and may be, for example, three or five or more. One or more anti-vibration devices 5 described above and also one or more anti-vibration devices having different structures from those described above may be provided between the two layers of the supported member 3.

### (Second embodiment)

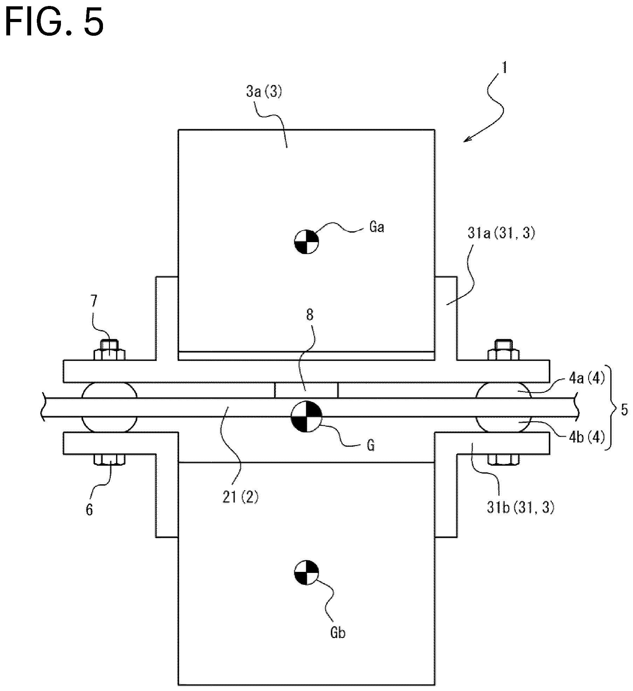

FIG. 5 is a schematic partial side view of an anti-vibration support structure according to the second embodiment of the present invention, which is illustrated in the same manner as FIG. 1(b). In the second embodiment, the same members or portions as those of the first embodiment are provided with the same reference signs, and in the following, the explanation thereof will be omitted.

The anti-vibration support structure 1 according to the second embodiment substantially differs from the anti-vibration support structure 1 according to the first embodiment only in that an elastic member 8 is further provided between the supported member 3 (the first supported member 3a) on the upper side in the vertical direction and the support member 2, while the other features are substantially the same as those of the anti-vibration support structure 1 according to the first embodiment described above.

More specifically, as illustrated in FIG. 5, in the second embodiment, the first mounting bracket 31a, which is a mounting portion of the first supported member 3a, is formed to extend so as to allow all of the plurality of (for example, four) anti-vibration devices 5 to be mounted thereto, and the elastic member 8 is provided between the first mounting bracket 31a and the horizontal frame portion 21 which is a mounting portion of the support member 2 (more specifically, in the example illustrated in FIG. 5, at a substantially center position among the plurality of anti-vibration devices 5). The material for forming the elastic member 8 is not particularly limited, and may be, for example, a rubber, a rubber-like elastic member, a metal spring, or the like.

For example, in the first embodiment illustrated in FIG. 1(a) and FIG. 1(b), the load of the first supported member 3a on the upper side in the vertical direction acting on the first anti-vibration mount 4a on the upper side in the vertical direction becomes larger than that acting on the second anti-vibration mount 4b on the lower side in the vertical direction. According to the second embodiment described above, additionally providing the elastic member 8 enables reduction in the load acting on the anti-vibration mount 4 (the first anti-vibration mount 4a) provided between the supported member 3 (the first supported member 3a) on the upper side in the vertical direction and the support member 2, and thus improvement in the durability of the anti-vibration mount 4.

### EXAMPLES OF THE INVENTION

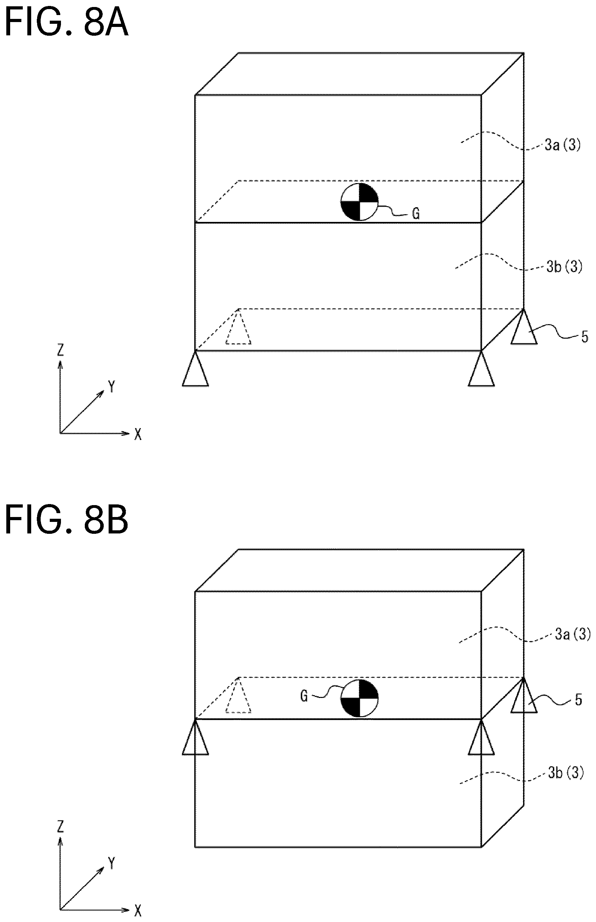

Hereinafter, an example of the present invention will be described with reference to FIG. 8A and FIG. 8B. However, the present invention is not limited the example described herein.

In the present example, the supported member 3 including two layers (the first supported member 3a and the second supported member 3b), which have the same rectangular parallelepiped shapes and the same weights and formed as housings, respectively, was prepared, and these two layers of the supported member 3 were stacked in the vertical direction and supported at four positions, as viewed from above, by the anti-vibration devices 5. In this state, the vibration of a constant load was input, in the Y-axis direction illustrated in FIG. 8A and FIG. 8B, to the position which is the same as the support position (the center position among the four positions) in the vertical direction, and then the amplitude (displacement) of each frequency at the position of the center of gravity G for whole was calculated by simulation.

As the example for comparison, FIG. 8A illustrates the case where the two layers of the supported member 3 (the first supported member 3a and the second supported member 3b) are supported at lower portions of the whole thereof, and as the example for simulation of the present invention, FIG. 8B illustrates the case where the two layers of the supported member 3 (the first supported member 3a and the second supported member 3b) are supported therebetween, that is, supported at the position which is the same in the vertical direction as the center of gravity G for whole.

As a result of the simulation, in the example for comparison illustrated in FIG. 8A, the rotational motion (rolling) around the X-axis illustrated therein occurred in the supported member 3, and thus the displacement of the center of gravity G for whole in the Y-axis direction at the specific frequency also became large. On the other hand, in the example of the present invention illustrated in FIG. 8B, it was found that the rotational motion did not occur in the supported member 3, and thus the displacement of the center of gravity G for whole in the Y-axis direction was suppressed to be small. That is, according to the result of the present simulation, it was confirmed that the present invention can advantageously reduce the displacement of the supported member when receiving the vibration input.

The embodiments and examples described above are exemplified embodiments according to the present invention, and various modifications can be made without departing from the scope of the claims.

### INDUSTRIAL APPLICABILITY

The anti-vibration support structure according to the present invention can be suitably used as any kind of anti-vibration support structure. For example, it can be suitably used in a construction machine such as a hydraulic excavator, as an anti-vibration support structure for supporting a housing as a supported member, which accommodates therein an electronic device such as a controller and an exhaust gas filter, on a vehicle body frame as a support member.

### REFERENCE SIGNS LIST

1: anti-vibration support structure,
2: support member, 21: horizontal frame portion (mounting portion), 21h: through-hole, 22: vertical frame portion,
3: supported member, 3a: first supported member, 3b: second supported member, 31: mounting bracket (mounting portion), 31a: first mounting bracket (first mounting portion), 31b: second mounting bracket (second mounting portion), 31ah, 31bh: through-hole,
4: anti-vibration mount, 4a: first anti-vibration mount, 4b: second anti-vibration mount, 41: inner cylinder, 42: outer cylinder, 41e, 42e: end face, 421: cylinder portion, 422: flange portion, 43: main rubber, 431: stopper portion, 5: anti-vibration device, 51: inner cylinder portion, 51h: axial cavity portion, 52: outer cylinder portion, 52c: circumferential recess portion, 53: main rubber portion,
6: bolt,
7: nut,
8: elastic member,
G: center of gravity of whole supported member (center of gravity for whole), Ga: center of gravity of first supported member (first center of gravity), Gb: center of gravity of second supported member (second center of gravity)

## Claims

1. An anti-vibration support structure for supporting a supported member on a support member in a vibration controlling manner,
the supported member including a total of two layers arranged in a vertical direction,
anti-vibration mounts being provided between each of the two layers of the supported member and the support member, respectively, and
the two layers of the supported member being rigidly coupled to each other via the anti-vibration mounts corresponding thereto.

2. The anti-vibration support structure according to claim 1, wherein
the anti-vibration mount includes an inner cylinder, an outer cylinder surrounding the inner cylinder, and a main rubber connecting the inner cylinder and the outer cylinder, the outer cylinder being provided, at an end portion on one side in an axial direction thereof, with a flange portion extending outwardly in a radial direction, and
the supported member is coupled to the inner cylinder, and the support member is coupled to the outer cylinder.

3. The anti-vibration support structure according to claim 2, wherein
the anti-vibration support structure includes at least one anti-vibration device between the two layers of the supported member,
each of the at least one anti-vibration device includes the two anti-vibration mounts, and also has an inner cylinder portion and an outer cylinder portion, the inner cylinder portion being formed such that two end faces on another side in an axial direction of the inner cylinders of the two anti-vibration mounts are brought to abut against each other, and the outer cylinder portion being formed such that two end faces on another side in an axial direction of the outer cylinders of the two anti-vibration mounts are brought to abut against each other,
a bolt is inserted into an axial cavity portion formed inside the inner cylinder portion to bolt mounting portions of the two layers of the supported member together, so that the two layers of the supported member are rigidly coupled to each other, and
a mounting portion of the support member is fit into a circumferential recess portion form in the outer cylinder portion such that the anti-vibration mounts are provided between each of the two layers of the supported member and the support member, respectively.

4. The anti-vibration support structure according to claim 3, wherein
the at least one anti-vibration device comprises a plurality of anti-vibration devices, and
the plurality of anti-vibration devices is provided between the two layers of the supported member.

5. The anti-vibration support structure according to claim 1, wherein
an elastic member is further provided between one of the two layers of the supported member which is positioned on an upper side in the vertical direction and the support member.
